# EUROPEAN PATENT APPLICATION

(11) **EP 2 846 301 A1**
(43) Date of publication of application: **11.03.2015**
(21) Application number: 13785029.3
(22) Date of filing: 30.04.2013
(51) Int. Cl.: G06Q 30/02

(54) **INFORMATION DISTRIBUTION SYSTEM**

(30) Priority: 02.05.2012 JP 2012105076
(71) Applicant: Dentsu Inc., Tokyo 105-7001 (JP)
(72) Inventor: YAMAGATA, Tomohiro, Tokyo 105-7001 (JP); TOMINO, Nagakazu, Tokyo 105-7001 (JP); URASAKI, Eijun, Tokyo 105-7001 (JP); NAKAMURA, Jinya, Tokyo 107-0061 (JP)
(74) Representative: Schwarz & Partner
(86) International application number: PCT/JP2013/002892
(87) International publication number: WO 2013/164911

(57) **Abstract**

To provide an information delivery system capable of delivering appropriate information on a per-user basis and improving information delivery effects. In an information delivery server 3, information on a location and a time of a terminal device 2 when an access request is transmitted from the terminal device 2 is recorded as user history information. The user history information is analyzed and a state database 7 is formed in which combinations of locations and times of the terminal device 2 are associated with states of a user (a first state (UCHI)) with a tendency to select information for working with priority over information for amusement, and a second state (HARE) with a tendency to select information for amusement with priority over information for working). A pattern of actions of the user of the terminal device 2 is analyzed on the basis of the state of the user and the location and the time of the terminal device 2 when the access request is made. The present state of the user is determined on the basis of the present location and time of the terminal device 2, and information according to the present state of the user and the pattern of actions of the user is delivered to the terminal device 2.

## Description

### Technical Field

The present invention relates to an information delivery system having a function to deliver appropriate information on a per-user basis.

### Background Art

An information delivery system has been used that delivers advertisements (information) for facilities, stores, etc., to portable terminals in the possession of users. In the conventional system, for example, when an advertisement for a facility or a store is delivered, information to be delivered is changed according to the distance between the facility or the store and a mobile terminal (see, for example, Patent Literature 1).

### Citation List

### Patent Literature

Patent Literature 1: Japanese Patent Laid-Open No. 2001-238266

### Summary of Invention

### Technical Problem

In the conventional information delivery system, however, if the distances between a facility or a store and mobile terminals are equal to each other, the same contents of an advertisement are delivered to different users (to all users), since the contents of the advertisement (information) to be delivered are determined according to the distances between the facility or the store and the mobile terminals. There is, therefore, a limitation to advertisement effects (information delivery effects).

The present invention has been achieved in consideration of the above-described problem, and an object of the present invention is to provide an information delivery system capable of delivering appropriate information on a per-user basis and improving information delivery effects.

### Solution to Problem

An information delivery server according to the present invention is an information delivery server capable of communicating with a terminal device, the information delivery server including a history information recording section that records, as user history information, information on a location and a time of the terminal device when an access request is transmitted from the terminal device to the information delivery server, a state database forming section that analyzes the user history information for a predetermined analysis time period, and forms a state database in which combinations of locations and times of the terminal device are associated with states of a user of the terminal device, and an action pattern analysis section that analyzes a pattern of actions of the user of the terminal device on the basis of the state of the user and the location and the time of the terminal device when the access request is made, the state of the user including a first state with a tendency to select information for working with priority over information for amusement, and a second state with a tendency to select information for amusement with priority over information for working, the information delivery server further including a receiving section that receives information on the present location of the terminal device, and an information delivery section that determines the present state of the user on the basis of the present location and time of the terminal device and delivers to the terminal device information according to the present state of the user and the pattern of actions of the user.

The present state of the user is thereby determined according to the present position and time of the terminal device. Appropriate information according to the present state and the pattern of actions of the user is delivered. In this case, the state of the user includes a first state (a state called "UCHI") with a tendency to select information for working with priority over information for amusement, and a second state (a state called "HARE") with a tendency to select information for amusement with priority over information for working. For example, when the present state is determined to be the first state (UCHI), a suitable information (an advertisement for a business hotel at a business trip destination or the like) according to the state (UCHI) and the pattern of actions (staying in a business hotel at a business strip destination or the like) of the user is automatically delivered. When the present state is determined to be the second state (HARE), a suitable information (an advertisement for a business/shopping quarter, an amusement quarter, or the like in Kyoto) according to the state (HARE) and the pattern of actions (making a trip to Kyoto on a holiday) of the user is automatically delivered.

In the information delivery server according to the present invention, the state database forming section converts information on the location and the time of the terminal device into information on a kind of area and a kind of time and forms the state database by associating the combination of the kind of area and the kind of time with the state of the user.

The information on the location and the time of the terminal device is thereby converted into information on a kind of area and a kind of time, and the combination of the kind of area and the kind of time is associated with the state of the user. It can be said that the kind of area is information of a location given a meaning and the kind of time is information on a time period given a meaning. The state of the user can be grasped more accurately by using the combination of the kind of area and the kind of time.

An information delivery system according to the present invention is an information delivery system including a terminal device and an information delivery server capable of communicating with the terminal device, the information delivery server including a history information recording section that records, as user history information, information on a location and a time of the terminal device when an access request is transmitted from the terminal device to the information delivery server, a state database forming section that analyzes the user history information for a predetermined analysis time period, and forms a state database in which combinations of locations and times of the terminal device are associated with states of a user of the terminal device, and an action pattern analysis section that analyzes a pattern of actions of the user of the terminal device on the basis of the state of the user and the location and the time of the terminal device when the access request is made, the state of the user including a first state with a tendency to select information for working with priority over information for amusement, and a second state with a tendency to select information for amusement with priority over information for working, the information delivery server further including a receiving section that receives information on the present location of the terminal device, and an information delivery section that determines the present state of the user on the basis of the present location and time of the terminal device and delivers to the terminal device information according to the present state of the user and the pattern of actions of the user.

A method according to the present invention is a method executed in an information delivery server capable of communicating with a terminal device, the method including recording, as user history information, information on a location and a time of the terminal device when an access request is transmitted from the terminal device to the information delivery server, analyzing the user history information for a predetermined analysis time period, and forming a state database in which combinations of locations and times of the terminal device are associated with states of a user of the terminal device, and analyzing a pattern of actions of the user of the terminal device on the basis of the state of the user and the location and the time of the terminal device when the access request is made, the state of the user including a first state with a tendency to select information for working with priority over information for amusement, and a second state with a tendency to select information for amusement with priority over information for working, the method further including receiving information on the present location of the terminal device, and determining the present state of the user on the basis of the present location and time of the terminal device and delivering to the terminal device information according to the present state of the user and the pattern of actions of the user.

A program according to the present invention is a program executed in an information delivery server capable of communicating with a terminal device, the program causing a computer to execute processing for recording, as user history information, information on a location and a time of the terminal device when an access request is transmitted from the terminal device to the information delivery server, processing for analyzing the user history information for a predetermined analysis time period, and for forming a state database in which combinations of locations and times of the terminal device are associated with states of a user of the terminal device, and processing for analyzing a pattern of actions of the user of the terminal device on the basis of the state of the user and the location and the time of the terminal device when the access request is made, the state of the user including a first state with a tendency to select information for working with priority over information for amusement, and a second state with a tendency to select information for amusement with priority over information for working, the program further causing the computer to execute processing for receiving information on the present location of the terminal device, and processing for determining the present state of the user on the basis of the present location and time of the terminal device and for delivering to the terminal device information according to the present state of the user and the pattern of actions of the user.

Also with the information delivery system, the method and the program, the present state of the user is determined according to the present location and time of the terminal device, as is that in the above-described information delivery server. Appropriate information according to the present state and the pattern of actions of the user is delivered. In this case, the state of the user includes a first state (a state called "UCHI") with a tendency to select information for working with priority over information for amusement, and a second state (a state called "HARE") with a tendency to select information for amusement with priority over information for working. For example, when the present state is determined to be the first state (UCHI), a suitable information (an advertisement for a business hotel at a business trip destination or the like) according to the state (UCHI) and the pattern of actions (staying in a business hotel at a business strip destination or the like) of the user is automatically delivered. When the present state is determined to be the second state (HARE), a suitable information (an advertisement for a business/shopping quarter, an amusement quarter, or the like in Kyoto) according to the state (HARE) and the pattern of actions (making a trip to Kyoto on a holiday) of the user is automatically delivered.

### Advantageous Effects of Invention

According to the present invention, the information delivery effects can be improved by delivering appropriate information on a per-user basis.

### Brief Description of Drawings

[Figure 1] Figure 1 is a block diagram showing a configuration of an information delivery system in a first embodiment of the present invention.
[Figure 2] Figure 2 is a diagram for explaining a first state (UCHI) and a second state (HARE) in the first embodiment of the present invention.
[Figure 3] Figure 3 is a diagram for explaining user history information and a state database in the first embodiment of the present invention.
[Figure 4] Figure 4 is a sequence diagram for explaining the operation of the information delivery system in the first embodiment of the present invention.
[Figure 5] Figure 5 is a block diagram showing a configuration of an information delivery system in a second embodiment of the present invention.
[Figure 6] Figure 6 is a block diagram showing a configuration of an information delivery system in a third embodiment of the present invention.

### Description of Embodiments

### (First Embodiment)

An information delivery server according to a first embodiment of the present invention will be described with reference to the drawings. In the description of the present embodiment, an information delivery server to be used as an advertisement delivery server or the like will be described by way of example. The server according to the present embodiment has a function to deliver appropriate information on a per-user basis. This function is realized by means of a program stored in an HDD, a memory, or the like in the server.

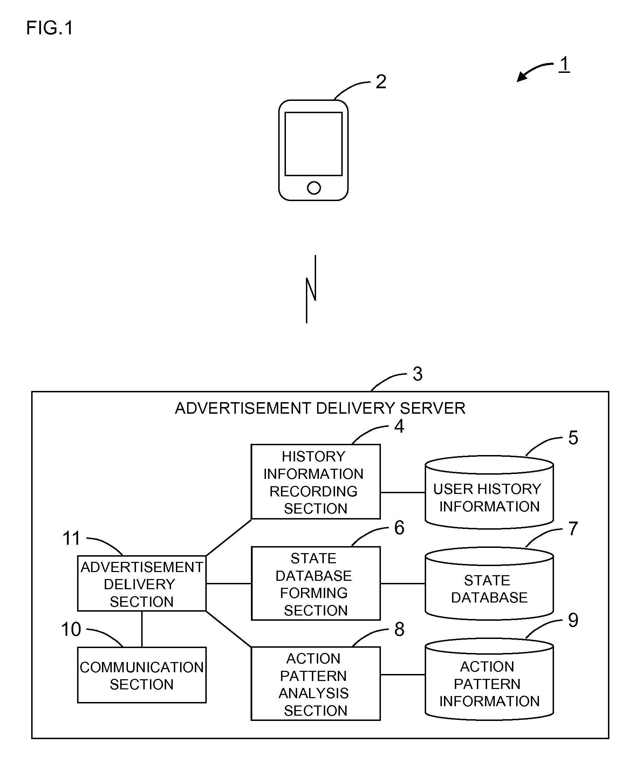

A configuration of an advertisement delivery system according to the present embodiment will first be described with reference to Figure 1. Figure 1 is a block diagram showing a configuration of an advertisement delivery system according to the present embodiment. As shown in Figure 1, an advertisement delivery system 1 is constituted by a terminal device 2 and an advertisement delivery server 3. The terminal device 2 is a portable terminal or the like in the possession of a user. The advertisement delivery server 3 is installed, for example, in a business company that offers an advertisement delivery service, and is capable of communicating with the terminal device 2 through a network (the Internet or the like, not shown in Figure 1). For ease of explanation, only one terminal device 2 and one advertisement delivery server 3 are illustrated in Figure 1. Needless to say, two or more terminal device 2 and two or more advertisement delivery servers 3 may exist.

The advertisement delivery server 3 is provided with a history information recording section 4 and a user history information storage section 5. The history information recording section 4 records, in the user history information storage section 5, as user history information, information on the location and the time of the terminal device 2 when an access request is transmitted from the terminal device 2 to the advertisement delivery server 3. The location may be a place name, (e.g., Tokyo: Marunouchi) or a latitude and a longitude (e.g., N degrees north and E degrees east). The time may be a time period (e.g., 7:00 to 9:59 in the morning) or a point in time (e.g., 7:31).

The advertisement delivery server 3 is provided with a state database forming section 6 and a state database 7. The state database forming section 6 analyzes the user history information for a predetermined analysis period (e.g., one week) and forms a state database 7 by associating combinations of locations and times of the terminal device 2 with states of the user of the terminal device 2. States of the user include a first state (UCHI) with a tendency to select information for working with priority over information for amusement, and a second state (HARE) with a tendency to select information for amusement with priority over information for working. "States of the user" will be described below in detail.

In this case, the state database forming section 6 can form a state database by converting information on locations and times of the terminal device 2 into information on kinds of area and kinds of time and by associating combinations of the kinds of area and the kinds of time with states of the user. For example, "N degrees north and E degrees east" and "12:05", which is information on a location and a time of the terminal device 2, is converted into "an office block" and "daytime", which is information on a kind of area and a kind of time. Also, a combination of a kind of area and a kind of time is associated with a state of the user (e.g., "office (workplace)" in "UCHI").

The advertisement delivery server 3 is also provided with an action pattern analysis section 8 and an action pattern information storage section 9. The action pattern analysis section 8 analyzes a pattern of actions of the user of the terminal device 2 on the basis of the state of the user and the location and the time of the terminal device 2 when an access request is made, and records the pattern of actions in the action pattern information storage section 9. Analysis of a "pattern of actions" will be described below in detail.

The advertisement delivery server 3 is further provided with a communication section 10 and an advertisement delivery section 11. The communication section 10 has a function to communicate with the terminal device 2 and can receive information on the present location of the terminal device 2. The advertisement delivery section 11 determines the present state of the user on the basis of the present location and time of the terminal device 2 and delivers to the terminal device 2 an advertisement according to the present state of the user and the pattern of actions of the user.

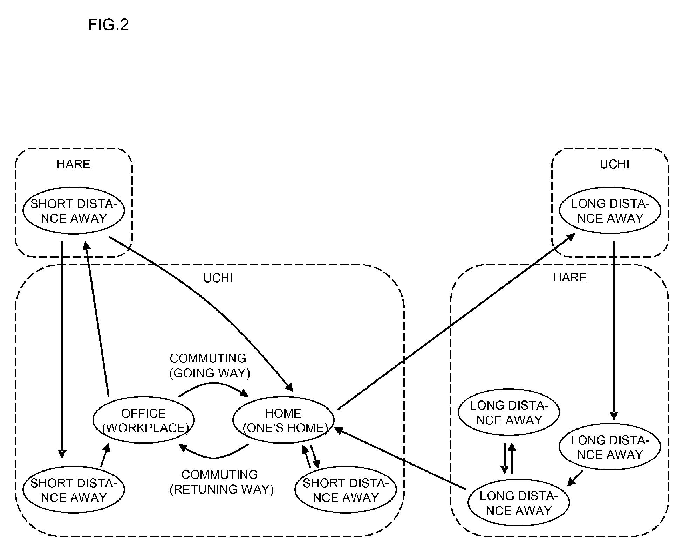

The "state of the user" at the time of access to the advertisement delivery server 3, i.e., the first state (UCHI) and the second state (HARE), will be described with reference to Figure 2. As shown in Figure 2, "UCHI" includes "home (one's home)", "office (place or work)", "commuting (going way, returning way)" and "short distance away". "HARE" includes "long distance away". "UCHI" may include "long distance away" and "HARE" may include "short distance away".

"Home" is a state of the user when the terminal device 2 (user) is located in a predetermined home mesh (or in an area with a radius of 800 m centered on a home mesh). For example, a "home mesh" is defined as a 1-km mesh (1-km-square area) where the number of access requests from the terminal device 2 is maximized in a time period from 0:00 to 6:59 on weekdays/holidays.

"Office" is a state of the user when the terminal device 2 (user) is located in a predetermined office mesh (or in an area with a radius of 800 m centered on an office mesh). For example, the "office mesh" is defined as a 1-km mesh (1-km-square area) where the number of access requests from the terminal device 2 is maximized in a time period from 10:00 to 18:59 on weekdays.

It is desirable to avoid recognizing the state as "office" when the number of access requests is not larger than 2. If the office mesh is in the vicinity of (e.g., within a range of nine meshes from) the home mesh, "office = home" may be adopted instead of "office". If the office mesh (a 1-km mesh with the largest number of access requests) is remote (e.g., 60 km or more away) from the home mesh, a 1-km mesh with the second largest number of access requests may alternatively be defined as the office mesh.

"Commuting (going way)" is a state of the user when the terminal device 2 (user) is located in an area with a predetermined living radius centered on the centroid of (the middle point between) the home mesh and the office mesh in a time period from 7:00 to 9:59 on a weekday. The "living radius" is set, for example, to 0.75 times (= 1.5 times 1/2) the distance between the home mesh and the office mesh. "Commuting (returning way)" is a state of the user when the terminal device 2 (user) is located in an area with the above-mentioned living radius centered on the centroid of (the middle point between) the home mesh and the office mesh in a time period from 17:00 to 24:59 on a weekday.

"Long distance away" is a state of the user when the terminal device 2 (user) is located in an area 30-km radius or more away from the centroid of (the middle point between) the home mesh and the office mesh. "Short distance away" is a state of the user other than those described above (i.e., a state of the user other than "home", "office", "commuting" and "long distance away").

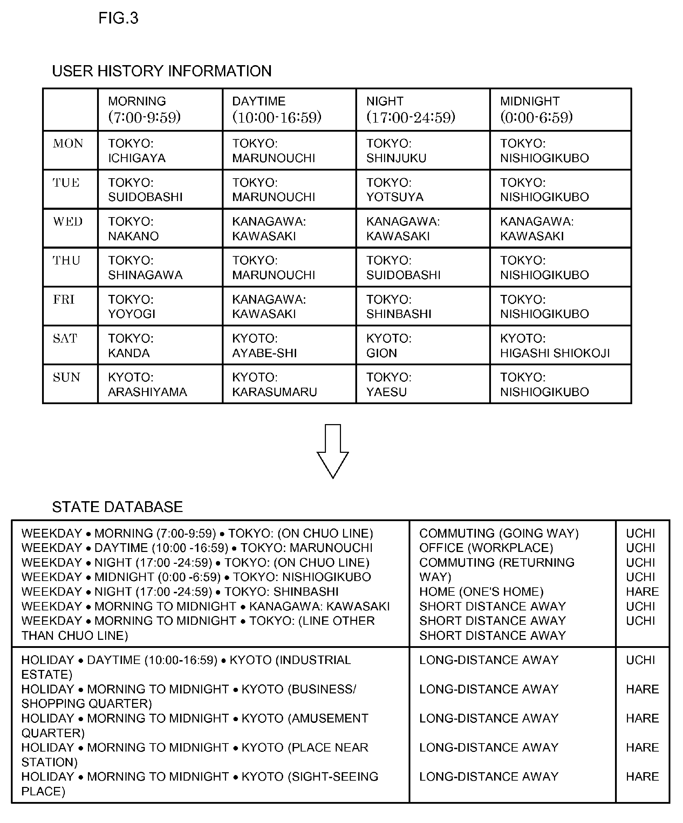

User history information and the state database 7 will be described in detail with reference to Figure 3. Figure 3 shows an example of user history information about a user (user A) and the state database 7. In this case, user A's home is in Nishiogikubo, user A's workplace is in Marunouchi, and user A uses the Chuo Line for commuting. User A sometimes makes a business trip to Kawasaki on weekdays and stays at Kawasaki after working till a late hour in some cases. User A sometimes drops into a public house in Shinbashi on some weekday nights. Further, user A makes a trip to Kyoto on Saturday and Sunday both for a recreational purpose and for a business purpose. In the example shown in Figure 3, the state database 7 for user A is formed by analyzing information on the locations and times (user history information) obtained at the times of user A's accessing hotel advertisements in a past one week.

Also, patterns of actions of user A are simultaneously analyzed on the basis of the states, locations and times of user A. For example, patterns (1) to (6) of actions of user A described below are determined from the user history information shown in Figure 3 (locations and times) and the states of user A.

Action pattern (1): Short-distance-away hotel advertisements are ordinarily clicked in the office (workplace) or during commuting (going way) in the morning till noon.

Action pattern (2): The short-distance-away hotel advertisements are mainly for places in the vicinity of Kawasaki.

Action pattern (3): Long-distance-away hotel advertisements are ordinarily clicked at the home (user's home) or during commuting (returning way) in the night till midnight.

Action pattern (4): The long-distance-away hotel advertisements are mainly for business/shopping quarters, amusement quarters, places near stations and sight-seeing places.

Action pattern (5): Long-distance-away items are ordinarily clicked on holidays. In this case, both short-distance-away hotel advertisements and long-distance-away hotel advertisements are clicked.

Action pattern (6): From the past location information, long-distance-away items for user A are business/shopping quarters, amusement quarters, places near stations and sight-seeing places.

The present state of user A is determined according to the present location and time of user A and an advertisement is delivered according to the present state and some of the patterns (1) to (6) of user A.

For example, if the present location of user A is "Tokyo: Marunouchi" and the present time is "11:30 (daytime, weekday), January 25, 2012", the present state of user A is determined to be "UCHI: office (workplace)" and a short-distance-away hotel advertisement is delivered.

If the present location of user A is "Tokyo: Kanda (on the Chuo Line)" and the present time is "19:50 (night, weekday), January 25, 2012", the present state of user A is determined to be "UCHI: commuting (returning way)" and an advertisement for a hotel in the vicinity of a sight-seeing place long distance away is delivered.

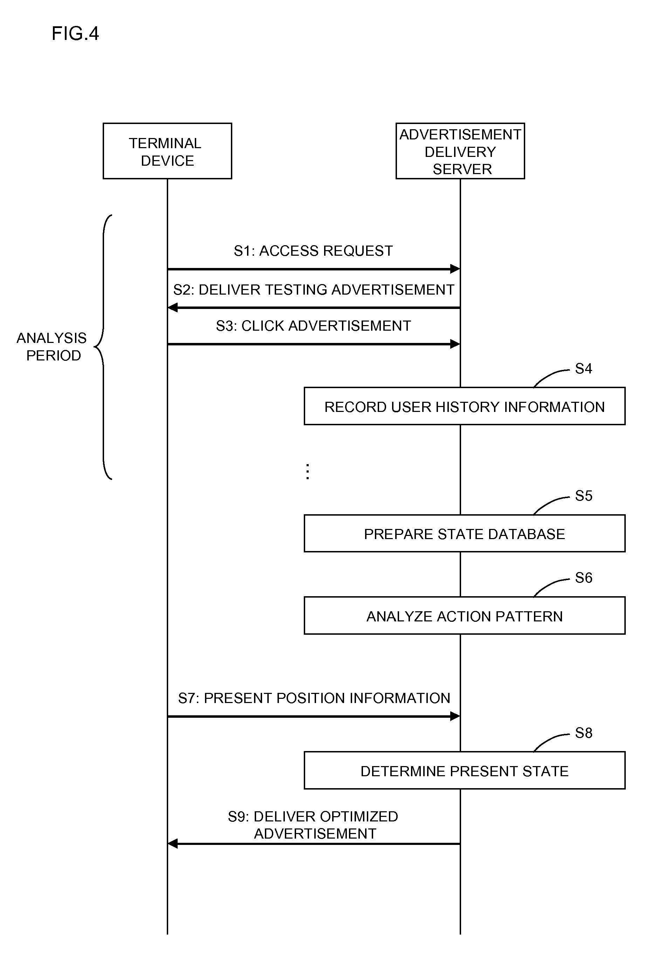

The operation of the advertisement delivery system 1 arranged as described above will be described with reference to the sequence diagram of Figure 4.

When advertisement delivery is performed by using the advertisement delivery system 1 according to the present embodiment, recording of user history information is performed for a predetermined analysis period (for example, one week). For example, when a predetermined Web site display is produced on the terminal device 2, an access request is transmitted from the terminal device 2 to the advertisement delivery server 3 (S1). Delivery of a testing advertisement from the advertisement delivery server 3 is then made (S2), and a display of the testing advertisement (banner display or the like) is produced on the terminal device 2. When the testing advertisement (banner advertisement) is clicked on the terminal device 2 (S3), information on the location and the time of the terminal device 2 is recorded as user history information in the advertisement delivery server 3 (S4).

Next, the advertisement delivery server 3 analyzes the user history information, forms the state database 7 by associating combinations of locations and times of the terminal device 2 with states of the user (the first state "UCHI" and the second state "HARE") (S5), and analyzes patterns of actions of the user of the terminal device 2 (S6) on the basis of the states of the user and the locations and times of the terminal device 2 each obtained upon making an access request.

Thereafter, upon receiving the present location information from the terminal device 2 (S7), the advertisement delivery server 3 determines the present state of the user on the basis of the present location and time of the terminal device 2 (S8), and delivers an advertisement according to the present state and pattern of actions of the user (optimized advertisement) to the terminal device 2 (S9).

Information on the present location of the terminal device 2 may be transmitted from the terminal device 2 to the advertisement delivery server 3 at the time of access request transmission (S1). When the testing advertisement (banner advertisement) is not clicked on the terminal device 2, the advertisement delivery server 3 may record the fact that the testing advertisement is not clicked, as user history information.

The advertisement delivery system 1 according to the present embodiment is capable of improving advertisement effects by delivering appropriate advertisements on a per-user basis.

In the present embodiment, the present state of the user is determined according to the present location and time of the terminal device 2, and an appropriate advertisement is delivered according to the present state and pattern of actions of the user. In this case, states of the user include a first state (also referred to as "UCHI") with a tendency to select information for working with priority over information for amusement, and a second state (also referred to as "HARE") with a tendency to select information for amusement with priority over information for working. For example, when the present state is determined to be the first state (UCHI), an appropriate advertisement (e.g., an advertisement for a business hotel at a business trip destination) according to the state (UCHI) and the pattern of actions (e.g., staying in a business hotel at a business trip destination) of the user is automatically delivered. When the present state is determined to be the second state (HARE), an appropriate advertisement (e.g., an advertisement for a business/shopping quarter or an amusement quarter) according to the state (HARE) and the pattern of actions (e.g., making a trip to Kyoto on a holiday) of the user is automatically delivered.

In the present embodiment, information on a location of the terminal device 2 (e.g., N degrees north and E degrees east) and a time (e.g., "12:05") is converted into a kind of area (e.g., "office block") and a kind of time (e.g., "daytime"), and the combination of the kind of area and the kind of time is associated with a state of the user. The kind of area can be said to be information on a location given a meaning (information on a significant location), and the kind of time can be said to be information on a time given a meaning (information on a significant time). A state of the user (e.g., "workplace") can be grasped more accurately by using a combination of a kind of area and a kind of time (e.g., "daytime, office block").

### (Second Embodiment)

An information delivery system according to a second embodiment of the present invention will be described. The information delivery system according to the second embodiment will be described mainly with respect to points of difference from the first embodiment. The components and operation of the present embodiment are the same as those of the first embodiment unless otherwise noted.

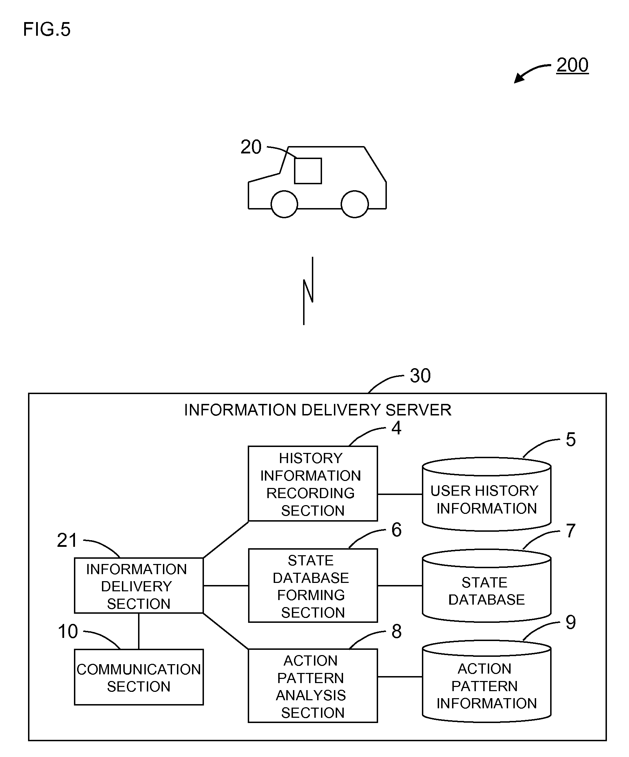

Figure 5 is a block diagram showing a configuration of an information delivery system according to the present embodiment. As shown in Figure 5, an information delivery system 200 in the present embodiment is constituted by a terminal device 20 and an information delivery server 30 mounted on a vehicle. The terminal device 20 is, for example, a navigation device mounted on a vehicle.

The information delivery server 30 is provided with an information delivery section 21. The information delivery section 21 determines the present state of a user on the basis of the present location and time of the terminal device 20 and delivers information according to the present state of the user and a pattern of actions of the user to the terminal device 20.

Information delivered to the user includes POI (point of interest) information capable of supporting or extending a user's moving action, TOI (timing of interest) information capable of notifying something to the user in a passive state or enabling the user to find something in a timely manner, and BOI (brand of interest) information which enables the user to have a feeling of being the owner of a branded item.

The POI information includes, for example, information on tourist spots, restaurants, stores, museums, leisure facilities and educational facilities. The TOI information includes, for example, weather information, news, entertainment information, traffic information, various sorts of ranking information, social news, event information and bargain sale information. The BOI information includes, for example, automobile brand news, maker brand news, global news, dealer news, service news and advertisements for various brands.

In the information delivery system 200 in the present embodiment, weather information, news, entertainment information, book ranking, information on nearby breakfast-providing eating houses, etc., are delivered to the terminal device 20, for example, when the user is waiting at traffic lights in the course of driving his/her car from his/her home toward his/her workplace in the morning (e.g., in a time period after 8:00 a.m.) on a weekday. It is desirable to deliver these sorts of information in such amounts that each sort of information can be browsed in a short time period (about 30 seconds).

Brand news with respect to the automobile model used by the user, bargain sale information, event information, etc., are delivered to the terminal device 20 when the user is driving his/her car toward his/her home in the afternoon (e.g., in a time period before 8:00 p.m.) on a weekday. Information on bargain sales and events in places near the user's home is not necessarily delivered because there is a high possibility of the user already knowing the information.

A lecture for knowledge of various matters according to user's liking, latest artist information, etc., are delivered to the terminal device 20 when the user is caught in a traffic jam in the course of driving his/her car from his/her home toward his/her workplace in the morning (e.g., in a time period before 9:00 a.m.) on a weekday. In this case, the time period for display of each content may be reduced (for example, to about fifteen seconds) to deliver a larger number of information items.

Traffic jam information, service area information, parking area information, etc., are delivered to the terminal device 20 when the user is driving on an express highway toward a his/her predetermined destination in the morning (e.g., in a time period before 10:00 a.m.) on a holiday. It is desirable in principle to avoid delivery of information other than information for supporting driving during driving on an express highway because it is necessary for the user to concentrate on safe driving.

When the user is waiting at traffic lights in the course of driving from a his/her destination to a place for lunch early afternoon, information for leisure around the lunch place, event information, etc., are delivered to the terminal device 20.

### (Third Embodiment)

An information delivery system according to a third embodiment of the present invention will be described. The information delivery system according to the third embodiment will be described mainly with respect to points of difference from the second embodiment. The components and operation of the present embodiment are the same as those of the second embodiment unless otherwise noted.

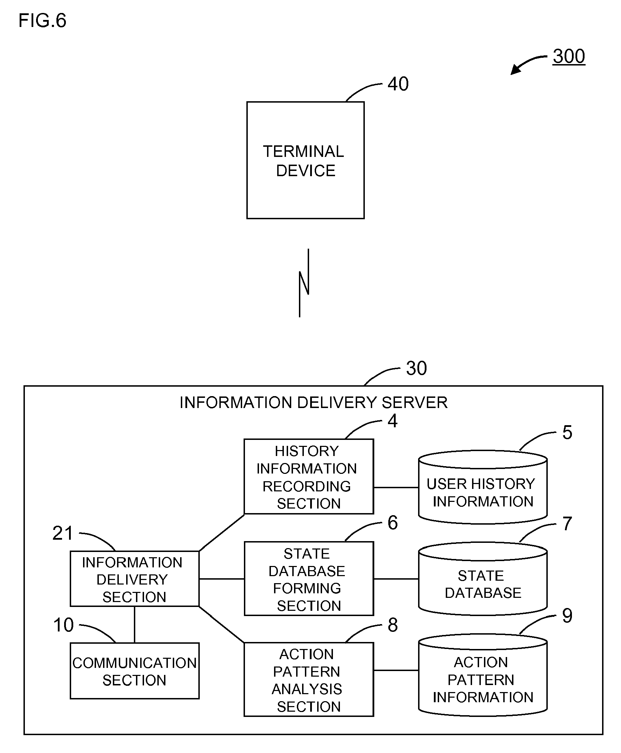

Figure 6 is a block diagram showing a configuration of an information delivery system according to the present embodiment. As shown in Figure 6, an information delivery system 300 in the present embodiment is constituted by a terminal device 40 and the information delivery server 30. The terminal device 40 is, for example, a television set, a personal computer or a digital signage. In the present embodiment, the terminal device 40 is fixed in the same place at all times and, therefore, the location of the terminal device 40 is not changed. In this case, upon determining that the information delivery server 30 is not changed in location of the terminal device 40 (its location is fixed), the information delivery server 30 determines the present state of the user on the basis of a "context" and "emotion" and delivers information according to the present state of the user to the terminal device 40.

"Context" will be described. A context includes a location significant in a group, a location significant in an individual and a transition of the location significant in the individual. The "significant location" includes a location in a real space, a location in a virtual space and a location in an action space. The "location in a real space" is a location on a map measured in latitude and longitude. The "location in a virtual space" is a location with respect to information contents, e.g., a location on a Web measured in URL, a location on a television broadcasting measured with respect to time and channels, a book or a music CD measured in ISBN or JAN code, or a game in a game-only machine. The "location in an action space" is a location with respect to what the user is doing (one other than those expressed with respect to information contents).

To obtain information as to what the user is doing, "what the user is using" is sensed in the present embodiment. That is, a location in an action space can be obtained by monitoring the state of use of a device made by the user (e.g., opening of a refrigerator, an operation on an air conditioner, or use of a pen) through a sensor attached to the device (e.g., a refrigerator, an air conditioner or a pen) used by the user. A television set, a music player, a personal computer, a game machine, or the like, as a device, expresses an action space, but its contents are expressed in a virtual space.

The following are examples of locations significant in groups.

### <Real space>

Business/shopping quarter: a place where people gather at the weekend
Residential place: a place where people spend a long time in the night, and where the population density is not extremely high
Station: a spot via which people travel
Railroad, road: a place through which people pass at a high speed at the time of traveling
Office block: a place where people who go to particular places in the morning and return at night visit in the daytime on weekdays

### <Virtual space>

Portal: a place where a large number of people visit first
A search site: a place where a person searching for something visits
Blog: a document in a virtual space visited by individuals with concern and interest therein or in a direct friendship or the like
News: a group of contents selectively visited from a list by individuals with concern and interest therein
EC site: a place where a value is provided in exchange for money
Game: a place where time and money are invested in filling a psychological void
SNS: a place to visit for communication
Music, book, moving image: consumption of contents
Map, address: a point of connection to a real space

### <Action space>

Hunger: Operation on a refrigerator, a microwave oven or an IH cooking heater
Dissatisfaction with temperature/humidity: operation on an air conditioner, an operation of a dehumidifier
Travel in real space: drive of a motor vehicle or a bicycle

The following are examples of locations significant in individuals.

### <Real space>

One's home: a place where one usually spends the longest time particularly in the night
One's workplace: a place where one spends the second longest time with respect to the longest time spent at his/her home, and where he or she stays mainly in the daytime on weekdays
Commuting path: a place used mainly for commuting between one's home and one's workplace
Neighborhood: a place near one's home or one's workplace where the one usually visits
Dangerous zone: an area where ordinary persons rarely set foot in, and where if one enters, he or she needs various pieces of equipment for protecting him/herself

### <Virtual space>

Home: a portal or a search site from which one starts searching for information
Tour destination: a document, news or amusement site periodically checked
Place to stay: a place where one stays continuously by performing receiving or exchange of contents for a long time, and which is a moving image sharing site, a bulletin board, a chat room, an SNS, or the like.
Hobby, interest: search for contents in which one is interested, and for relating information
Friend: a place where one starts communicating or exchanging information with a person with whom he or she has really or virtually made him/herself acquainted, and where the one may stay or not
Search destination: a strange place that one is prompted to visit from a search site when searching for something

### <Action space>

(In an action space, a meaning for an individual and a meaning for every other person ordinary overlap each other since a context has already been expressed. However, a special case may particularly be mentioned in which one device has different meanings.)

Automobile: spatial movement for other persons; a place for "me" to listen music.

### (Using musical contents, sensitive to music information)

Bath: a place for other persons to clean their bodies; a place for "me" to watch television.

The following are examples of transitions of locations significant in individuals.

### <Real space>

A place near a workplace for a person who is ordinarily in his/her workplace in the daytime on weekdays: lunch
Remote place for a person who is ordinarily at his/her home in the daytime on weekdays: leisure or the like
A person who is ordinarily in his/her workplace in the daytime on weekdays is in a hospital today: going to the hospital
A person got off a train in the morning on a weekday at a station which he or she usually passes without getting off: on the road in business

### <Virtual space>

Exiting one step from a usual tour destination: an article touching a cord in one's heart
An EC site newly visited: a new direction of concern and interest
One who usually makes a stay for a long time at a site made a short stay at the site today: busy
Visiting an EC site from a result of a search made after reading a friend's blog: finding of a recommendation

### <Action space>

A person who is ordinarily in his/her workplace in the daytime on weekdays continues watching television at his/her home today: being sick in bed at home

A person who is ordinarily in his/her workplace in the daytime on weekdays has continued watching television at his/her home over several days: being at home after being laid off

### <Space-to-space action>

Visiting a store found on a map
Checking trains for return home while being in a business/shopping quarter
Searching for a place to visit while being at a station
Visiting a game site in an office
Going shopping after checking the contents of a refrigerator and checking the contents of the refrigerator in the home during shopping
Checking programs on TV tonight during working, programming a home video recorder to record a program, and operating a home air conditioner on one's way home

A context construction method (contextualization) will subsequently be described. In an "action space", a device and a context generally coincide with each other. The action space can therefore be used immediately as an alternative variable for the context. (For example, an operation of an air conditioner signifies discomfort due to the temperature/humidity, and an operation of a refrigerator can be replaced with a direct meaning such as "hungry" or "thirsty".) Accordingly, a contextualization operation is required in a "real space" and a "virtual space".

First, conceptualization of a location in a "real space" is performed by considering two points: what in general the location is, and what for the individual the location is. The former (what in general the location is) is a meaning of the location, such as a residential quarter, a business/shopping quarter, forests, a place in the vicinity of a station, a place on a railroad, or a place in the vicinity of a convenience store, obtained from information expressed on a map. The latter (what for the individual the location is) is a meaning given to a place, such as a place in the vicinity of the individual's home, a place in the vicinity of the workplace, a place on the commuting path, a terminal station in the commuting path, a familiar leisure facility, a relative's house, or a home stadium for a favorite soccer team, where the person visits with high frequency.

Next, contextualization of a location in a "virtual space" requires generalization of two points: in what meaning in general contents in the virtual space are taken, and in what meaning the individual takes contents in the virtual space. Clustering of information is applied to this. Clustering is an ordinary analysis method in statistics in which items identical in characteristics to each other are combined and sorted. There are various method of analysis by clustering. In the present embodiment, "clustering with respect to contents" and "clustering with respect to users" are used.

Clustering with respect to contents is a method in which a statistical technique called text mining is used to classify, by related keywords or the like, documents (character information, images and audio) provided on Web sites and accompanying meta-information (character information attached mainly to non-character information, such as motion picture synopses, actors, actresses, producers, musical artist names, names of lyrics writers and composers, CM brand names, performers and music titles). For example, contents in which keywords, comments, videos and images relating to railroads appear frequently are classified into a genre "railroad", and contents in which the know-how to produce agricultural products, sales of seed, specifications of farming tools, etc., are written are classified into a genre "agriculture". Genres of news or the like can also be inferred from the frequencies of appearance of related keywords. For example, if names of sport players and names of baseball stadiums appear in news, the news can be classified into sports news. If names of politicians appear frequently in news, the news can be classified into political news. If names of enterprises appear in news, the news can be classified into economics news.

Clustering with respect to users is a method of classifying contents according to who is using the contents. If a person A is a railroad fan, he or she concentrates his/her energies on taking, for example, information from timetable sites, railroad photography sites, news concerned with railroads, other railroad fans' blogs and DVDs relating to railroads. If a person B likes an idol group, he or she concentrates his/her energies on taking, for example, information from an official site for the idle group, a moving image site containing promotion videos, music CDs and promotion DVDs, programs which the idol group appears, commercials in which the idol group plays and news about the idol group. Thus, the genres classified with respect to the contents are transversely pierced according to by whom the contents are seen. An idol group X and an idol group Y in the same genre may have fans in different generations. With respect to these fans in particular, different keywords for other genres in which these fans are concerned and interested are expected.

Description will subsequently be made of "emotion". Emotions that a doer may have are each expressed as a psychological condition, particularly an attitude to permit information, and include, for example, the following.
Positive (a mood to favorably interpret information received), negative (a mood to unfavorably interpret)
Active (a mood to willingly proceed to take information), passive (a mood to willingly accept information coming toward the doer)
HARE (full of curiosity and a mood to accept a new thing), UCHI (a mood to live unconcernedly as usual)
Excited (an emotional mood responsive to an external factor), cool (a mood to rationally deal with an external factor)
Irritated (an uneasy feeling of having an unsatisfied desire), easy (an easy feeling of having one's own desire satisfied)

As a method of composing an emotion (emotionalization), a method of regarding an emotional keyword as an emotion at a point in time at which the emotional keyword is found, for example, in words sent by personal information sending from an SNS or a blog can be used. The method of composing an emotion from text information sending also includes an expression with an emoticon or the like as well as an expression with words or symbols for directly expressing an emotion. Further, an emotion in a context (criticizing something, extolling or admiring) can be inferred from such a flow; subconsciousness can be inferred from the frequency of occurrence of a keyword; and an emotion of a correspondent in communication can be inferred from a reaction of the correspondent. An emotion can also be composed by a combination of expressions made as described above, if the accuracy problem is ignorable.

Monitoring information observed with a sensor or a device, as an expression from a correspondent, can also be used as a constituent of an emotion as well as character information consciously sent. For example, in a case where a smartphone is carried, information on the way in which the smartphone is used (e.g., touched in a fidgety manner, touched at odd times, with some sentences written thereon, or touched at all times) can be used. Further, since the recent smartphones are provided with various sensors, walking, running, turning, being on a vehicle, frequently inclining the smartphone (for example, when the user inclines the smartphone in some directions while referring to a map, failing to ascertain the current location, and getting irritated), and occurrence of a serious impact on the smartphone, for example, can be recognized.

In a case where sensors on an automobile are used, an emotion as a in hurried, irritated, or relaxed state can be read, for example, from the amount of depression of the acceleration pedal, and the weather can be read from the movement of wipers. Driving with concentration and a feeling such as a good feeling in driving can be read therefrom. Information obtained, for example, from sensors for sensing uses of home electric appliances, the temperature and humidity in the passenger chamber of the vehicle or in a house, and monitoring of pulsation and perspiration through a watch can also be used for emotion inference.

In the information delivery system 300 in the present embodiment, when it is determined that the "context" of the user is "working" and the "emotion" is "concentrated, strained" in a situation where the user is working in the workplace in the morning (at about 9:00 a.m.) on a weekday, news about an enterprise visited on the day before and news about an exhibition held on an exhibition site on a route passed through on the day before are delivered to the terminal device 40 (a personal computer in the workplace in this case).

When it is determined that about noon on a weekday the "context" of the user is "lunch, cold" and the "emotion" is "hungry", an advertisement for a ramen shop recently opened is delivered to the terminal device 40 (a digital signage in this case) when the user passes in front of the digital signage at the station in the course of going for lunch. When the user returns to the workplace after lunch, CM information on the automobile in the possession of the user is delivered.

When it is determined that the "context" of the user is "watching television at home" and the "emotion" is "relaxation" in a situation where the user is watching television at his/her home in the afternoon (past 7:30 p.m.) on a weekday, TOI information indicating that the watch worn by a talented in the program being viewed is the same as that in the possession of the user is delivered to the terminal device 40 (the television set in this example).

The embodiments of the preset invention have described by way of example. However, the scope of the present invention is not limited to the described embodiments. Various modifications and changes can be made according to a purpose within the scope described in the Claims.

### Industrial Applicability

The information delivery system according to the present invention has the advantage of improving the information delivery effects (advertisement effects) and is useful when used as an advertisement delivery system or the like.

### Reference Signs List

- 1: Advertisement delivery system
- 2: Terminal device
- 3: Advertisement delivery server
- 4: History information recording section
- 5: User history information storage section
- 6: State database forming section
- 7: State database
- 8: Action pattern analysis section
- 9: Action pattern information storage section
- 10: Communication section
- 11: Advertisement delivery section
- 200: Information delivery system
- 20: Terminal device
- 21: Information delivery section
- 30: Information delivery server
- 300: Information delivery system
- 40: Terminal device

## Claims

1. An information delivery server capable of communicating with a terminal device, the information delivery server comprising:
a history information recording section that records, as user history information, information on a location and a time of the terminal device when an access request is transmitted from the terminal device to the information delivery server;
a state database forming section that analyzes the user history information for a predetermined analysis time period, and forms a state database in which combinations of locations and times of the terminal device are associated with states of a user of the terminal device; and
an action pattern analysis section that analyzes a pattern of actions of the user of the terminal device on the basis of the state of the user and the location and the time of the terminal device when the access request is made; wherein
the state of the user includes a first state with a tendency to select information for working with priority over information for amusement, and a second state with a tendency to select information for amusement with priority over information for working, and wherein
the information delivery server further comprises:
a receiving section that receives information on a present location of the terminal device; and
an information delivery section that determines a present state of the user on the basis of the present location and time of the terminal device and delivers to the terminal device information according to the present state of the user and the pattern of actions of the user.

2. The information delivery server according to Claim 1, wherein the state database forming section converts information on the location and the time of the terminal device into information on a kind of area and a kind of time and forms the state database by associating the combination of the kind of area and the kind of time with the state of the user.

3. An information delivery system comprising a terminal device and an information delivery server capable of communicating with the terminal device, wherein
the information delivery server includes:
a history information recording section that records, as user history information, information on a location and a time of the terminal device when an access request is transmitted from the terminal device to the information delivery server;
a state database forming section that analyzes the user history information for a predetermined analysis time period, and forms a state database in which combinations of locations and times of the terminal device are associated with states of a user of the terminal device; and
an action pattern analysis section that analyzes a pattern of actions of the user of the terminal device on the basis of the state of the user and the location and the time of the terminal device when the access request is made; wherein
the state of the user includes a first state with a tendency to select information for working with priority over information for amusement, and a second state with a tendency to select information for amusement with priority over information for working, and wherein
the information delivery server further includes:
a receiving section that receives information on a present location of the terminal device; and
an information delivery section that determines a present state of the user on the basis of the present location and time of the terminal device and delivers to the terminal device information according to the present state of the user and the pattern of actions of the user.

4. A method executed in an information delivery server capable of communicating with a terminal device, the method comprising:
recording, as user history information, information on a location and a time of the terminal device when an access request is transmitted from the terminal device to the information delivery server;
analyzing the user history information for a predetermined analysis time period, and forming a state database in which combinations of locations and times of the terminal device are associated with states of a user of the terminal device; and
analyzing a pattern of actions of the user of the terminal device on the basis of the state of the user and the location and the time of the terminal device when the access request is made; wherein
the state of the user includes a first state with a tendency to select information for working with priority over information for amusement, and a second state with a tendency to select information for amusement with priority over information for working, and wherein
the method further comprises:
receiving information on a present location of the terminal device; and
determining a present state of the user on the basis of the present location and time of the terminal device and delivering to the terminal device information according to the present state of the user and the pattern of actions of the user.

5. A program executed in an information delivery server capable of communicating with a terminal device, the program causing a computer to execute:
processing for recording, as user history information, information on a location and a time of the terminal device when an access request is transmitted from the terminal device to the information delivery server;
processing for analyzing the user history information for a predetermined analysis time period, and for forming a state database in which combinations of locations and times of the terminal device are associated with states of a user of the terminal device; and
processing for analyzing a pattern of actions of the user of the terminal device on the basis of the state of the user and the location and the time of the terminal device when the access request is made; wherein
the state of the user includes a first state with a tendency to select information for working with priority over information for amusement, and a second state with a tendency to select information for amusement with priority over information for working, and wherein
the program further causes the computer to execute:
processing for receiving information on a present location of the terminal device; and
processing for determining a present state of the user on the basis of the present location and time of the terminal device and for delivering to the terminal device information according to the present state of the user and the pattern of actions of the user.
